# EUROPÄISCHE PATENTSCHRIFT

(11) **EP 0 360 070 B1**
(45) Veröffentlichungstag und Bekanntmachung des Hinweises auf die Patenterteilung: **27.04.1994**
(21) Anmeldenummer: 89116411.3
(22) Anmeldetag: 06.09.1989
(51) Int. Cl.: H04N 5/45

(54) **Anordnung zur gleichzeitigen Darstellung mehrerer Fernsehsignale**
Device for simultaneously displaying several television signals
Dispositif de représentation simultanée de plusieurs signaux de télévision

(30) Priorität: 19.09.1988 DE 3831754
(43) Veröffentlichungstag der Anmeldung: 28.03.1990
(73) Patentinhaber: GRUNDIG E.M.V. Elektro-Mechanische Versuchsanstalt Max Grundig holländ. Stiftung & Co. KG., D-90762 Fürth (DE)
(72) Erfinder: Gwiosda, Horst GRUNDIG EMV Max Grundig, D-8510 Fürth/Bay. (DE)

(56) Entgegenhaltungen:
- EP-A- 0 229 526
- EP-A- 0 261 893
- EP-A- 0 267 020
- DE-A- 2 749 542
- DE-A- 3 028 223
- PATENT ABSTRACTS OF JAPAN, Band 11, Nr. 182 (E-515)[2629], 11. Juni 1987;& JP-A-62 013 176 (SHARP CORP.) 21-01-1987
- PATENT ABSTRACTS OF JAPAN, Band 11, Nr. 314 (E-549)[2761], 13. Oktober 1987;& JP-A-62 108 680 (SHARP CORP.) 19-05-1987
- PATENT ABSTRACTS OF JAPAN, Band 10, Nr. 104 (E-397)[2161], 19. April 1986;& JP-A-60 242 781 (MITSUBISHI DENKI K.K.) 02-12-1985
- PATENT ABSTRACTS OF JAPAN, Band 6, Nr. 16 (E-92)[894], 29. Januar 1982;& JP-A-56 136 089 (SHARP K.K.) 23-10-1981

## Beschreibung

Die Erfindung betrifft eine Anordnung zur gleichzeitigen Darstellung mehrerer Fernsehsignale mit den im Oberbegriff des Anspruchs 1 angegebenen Merkmalen.

Aus der unter der Veröffentlichungsnummer EP-A-0 261 893 offengelegten europäischen Patentanmeldung ist ein Fernsehempfänger bekannt, bei dem eine Bild - im - Bild - Darstellung möglich ist. Bei diesem Fernsehempfänger wird sowohl in das Kleinbild als auch in das Großbild eine Kennung eingeblendet. Diese Kennung besteht entweder aus der jeweiligen Kanalnummer oder beispielsweise einem Schriftzug wie "VIDEO 2". Aufgrund der überlagerten Darstellung von Bild und Kennung ist - insbesondere bei bestimmten Bildhelligkeiten - die Kennung nur schwer lesbar. Deshalb wird in der genannten europäischen Patentanmeldung vorgeschlagen, die Größe der Kennung des Kleinbildes variabel zu gestalten.

Weiterhin ist aus der unter der Veröffentlichungsnummer EP-A-0 267 020 offengelegten europäischen Patentanmeldung eine Anordnung zur gleichzeitigen Darstellung mehrerer Fernsehsignale mit den im Oberbegriff des Anspruchs 1 angegebenen Merkmalen bekannt. Insbesondere erfolgt die Darstellung der Fernsehsignale bei dieser bekannten Anordnung nichtüberlappend. Eine Darstellung von Kennungen zu den einzelnen Fernsehsignalen ist bei dieser bekannten Anordnung nicht vorgesehen.

Die Aufgabe der Erfindung besteht darin, eine Anordnung der im Oberbegriff des Anspruchs 1 angegebenen Art derart weiterzubilden, daß eine Zuordnung jedes Kleinbildes zur zugehörigen Signalquelle ohne weiteres möglich ist.

Diese Aufgabe wird bei einer Anordnung der im Oberbegriff des Anspruchs 1 angegebenen Art durch die im kennzeichnenden Teil des Anspruchs 1 angegebenen Merkmale gelöst. Vorteilhafte Ausgestaltungen der Erfindung ergeben sich aus den Unteransprüchen.

Die Vorteile der Erfindung besteht insbesondere darin, daß der Betrachter des Bildschirms durch die gleichzeitig zu den Kleinbildern dargestellten Kennungen sofort eine Zuordnung zwischen jedem der Kleinbilder und der zugehörigen Signalquellen herstellen kann und daß die Kennungen aufgrund der mit den Kleinbildern nichtüberlappenden Darstellung gut lesbar sind.

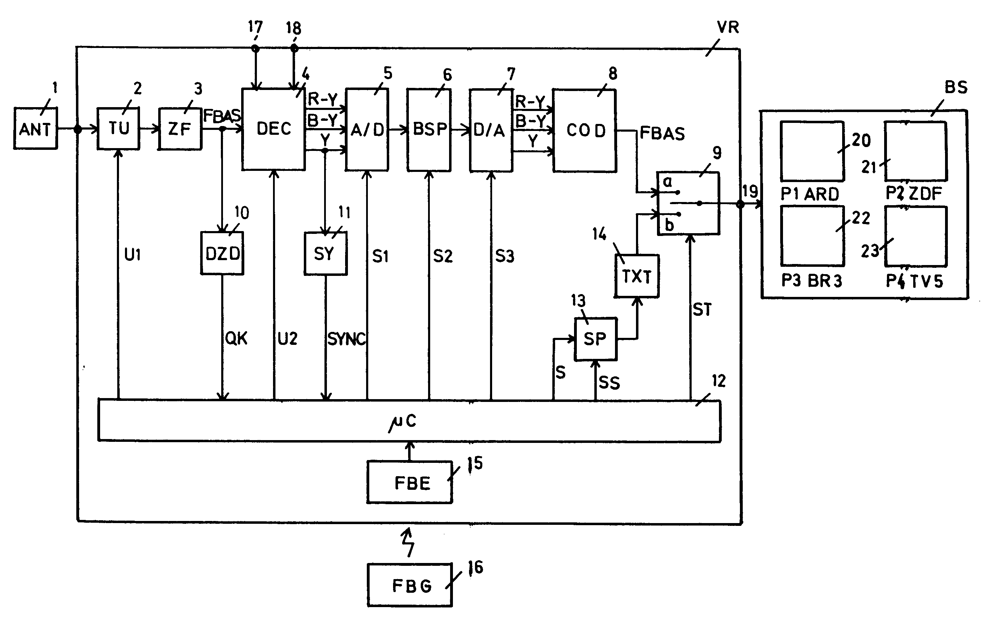

Weitere vorteilhafte Eigenschaften der Erfindung ergeben sich aus einem Ausführungsbeispiel, welches im folgenden anhand der Figur näher erläutert wird.

Die Figur zeigt einen an eine Antenne oder eine Kabelübertragungsstrecke 1 angeschlossenen Videorecorder VR mit einem Tuner 2, einem ZF-Verstärker 3, einem Farbdecoder 4, einem A/D-Wandler 5, einem Bildspeicher 6, einem D/A-Wandler 7, einem Farbcoder 8, einem Schalter 9, einem Datenzeilendecoder 10, einer Synchronsignalabtrennstufe 11, einer einen Mikrocomputer aufweisenden Steuerschaltung 12, einem Kennungssignalspeicher 13, einem Textgenerator 14, einem Fernbedienungsempfänger 15, einem Fernbedienungsgeber 16, einem ersten Eingang 17, einem zweiten Eingang 18 und einem Ausgang 19. Die am Ausgang 19 des Videorecorders VR zur Verfügung gestellten Signale werden einem Fernsehempfänger zugeführt und auf dessen Bildschirm BS dargestellt.

Dies geschieht im einzelnen wie folgt:
Mittels des Fernbedienungsgebers 16 wird ein Betriebszustand angewählt, in dem die Fernsehsignale von mehreren Signalquellen gleichzeitig auf dem Bildschirm BS dargestellt werden. Dieses Singal vom Fernbedienungsgeber 16 wird der Steuerschaltung 12 über den Fernbedienungsempfänger 15 zugeführt. Die Steuerschaltung 12 führt dem Tuner 2 Umschaltsignale U1 zu, die den Tuner 2 nacheinander auf einen ersten Block von Fernsehsendern abstimmen.

Dieser erste Block von Fernsehsendern besteht aus den Sendern bzw. Signalquellen, deren Abstimmdaten unter den Stationstastennummern 1-4 in einem Abstimmdatenspeicher des Videorecoders abgelegt sind.

Ist der Tuner durch das erste der Umschaltsignale U1 auf den der Stationstastennummer 1 zugehörigen Sender abgestimmt, so wird ein Bildsignal dieses Senders über den ZF-Verstärker 3, den Farbdecoder 4, der das Bildsignal in die Komponenten Y, R-Y und B-Y aufspaltet, und den A/D-Wandler 5 in den Bildspeicher 6 eingeschrieben. Dieser Einschreibvorgang wird von der Steuerschaltung 12, welcher die aus der Luminanzkomponente Y des Bildsignals mittels einer Synchronsignalabtrennstufe 11 abgetrennten Synchronimpulse SYNC zugeführt werden, derart gesteuert, daß ein Kleinbild mit reduzierter Auflösung erhalten wird. Dies kann beilspielsweise durch Weglassen von Bildpunkten bzw. Zeilen erreicht werden. Das erhaltene Kleinbild wird in digitaler Form in einem ersten Speicherbereich des Bildspeichers 6 abgespeichert.

Ist der Tuner 2 durch das zweite der Umschaltsignale U1 auf den der Stationstastennummer 2 zugehörigen Sender abgestimmt, so wird auf die vorstehend beschriebene Weise ein zugehöriges Kleinbild mit reduzierter Auflösung in digitaler Form in einem zweiten Speicherbereich des Bildspeichers 6 abgespeichert.

Ebene werden anschließend Kleinbilder mit reduzierter Auflösung zu den den Stationstastennummern 3 und 4 zugehörigen Sendern in digitaler Form in einem dritten und vierten Speicherbereich des Bildspeichers 6 abgespeichert.

Die Signale werden nun aus dem Bildspeicher 6 ausgelesen und über einen D/A-Wandler 7 einem Farbcoder 8 zugeführt, an dessen Ausgang wieder ein FBAS-Signal zur Verfügung steht. Dieses FBAS-Signal wird an einen Anschluß a eines Schalters 9 angelegt, an dessen Anschluß b - wie unten noch erläutert wird - die Ausgangssignale eines Textgenerators 14 anliegen, welchem die in einem nichtflüchtigen Speicher 1 in digitaler Form abgelegten Programmkennungen zu den Kleinbildern zugeführt werden.

Die Auslesevorgänge aus dem Bildspeicher 6, dem nichtflüchtigen Speicher 13 und die Umschaltvorgänge des Schalters 9 werden von der Steuerschaltung 12 derart gesteuert, daß die Fernsehsignale und die Ausgangssignale des Textgenerators 14, welche Programmkennungen in alphanumerischer Form darstellen, auf dem Bildschirm BS in Form mehrerer Kleinbilder bzw. alphanumerischer Zeichen gleichzeitig und nichtüberlappend dargestellt werden. Der Hintergrund der alphanumerischen Zeichen ist vorzugsweise dunkel, so daß die vorzugsweise als helle Schriftzeichen dargestellten alphanumerischen Zeichen gut lesbar sind. Die Programmkennung zu jedem der Kleinbilder besteht vorzugsweise aus einer Stationstastennummer (z.B. "P1") und einer Senderkurzbezeichnung (z.B. "ARD").

Im folgenden werden zwei Möglichkeiten näher beschrieben, wie die Programmkennungen im Speicher 13 abgelegt werden können.

Eine erste Möglichkeit besteht darin, beim Abstimmvorgang jeder Stationstaste des Videorecorders nicht nur Abstimmdaten, sondern auch eine Senderkurzbezeichnung zuzuordnen und diese Senderkurzbezeichnung mittels des Fernbedienungsgebers 16 manuell einzugeben. Diese Senderkurzbezeichnung wird im nichtflüchtigen Speicher 13 in geeigneter Form abgespeichert und bei einer Darstellung eines Kleinbildes vom zugehörigen Sender - wie oben beschrieben - unter Steuerung durch die Steuerschaltung 12 zusammen mit der Stationstastennummer als Kennungssignal in alphanumerischer Form auf dem Bildschirm BS dargestellt.

Eine zweite Möglichkeit besteht darin, nach getätigter Abstimmung aus dem Sendersignal mittels eines Datenzeilendecoders 10 ein beispielsweise in der Datenzeile 16 des Fernsehsignals übertragenes Quellenkennungssignal QK abzutrennen, welches den Sender eindeutig spezifiziert. Dieses Quellenkennungssignal QK wird in der Steuerschaltung 12, unter Auswertung einer vom Gerätehersteller erstellten Konkordanztabelle identifiziert und in geeigneter Form im nichtflüchtigen Speicher 13 abgelegt. Bei einer Darstellung eines Kleinbildes vom zugehörigen Sender kann dann - wie oben beschrieben - die Senderkurzbezeichnung zusammen mit der Stationstastennummer in alphanumerischer Form als Kennungssignal auf dem Bildschirm BS dargestellt werden.

Eine erste vorteilhafte Weiterbildung der Erfindung besteht darin, mittels des Fernbedienungsgebers 16 von der Darstellung eines ersten Blockes von Kleinbildern, wie beispielsweise einer Darstellung der den Stationstastennummern 1-4 zugeordneten Programme, umzuschalten auf eine Darstellung eines zweiten Blockes von Kleinbildern, wie beispielsweise der Darstellung der dem Stationstastennummern 5-8 zugeordneten Programme, usw. Sind beispielsweise insgesamt 20 verschiedene Programme empfangbar und den Stationstasten zugeordnet, so können die zugehörigen Kleinbilder samt Kennung beispielsweise in 5 Viererblöcken nacheinander dargestellt werden, wobei der Benutzer den Zeitpunkt der Umschaltung zwischen den einzelnen Blöcken bestimmt.

Eine zweite vorteilhafte Weiterbildung der Erfindung besteht darin, mittels des Fernbedienungsgebers die örtliche Lage und Reihenfolge der auf dem Bildschirm BS dargestellten Kleinbilder zu variieren. So kann beispielsweise vom Benutzer festgelegt werden, welches Programm am Bildschirm "oben links" erscheinen soll oder welche vier Programme gleichzeitig am Bildschirm dargestellt werden sollen.

Eine dritte vorteilhafte Weiterbildung der Erfindung besteht darin, nicht nur vom Ausgang des Tuners 2 abgeleitete Signale auf den Bildschirm BS darzustellen, sondern auch Signale, die dem Videorecorder über einen ersten Eingang 17 und/oder einen zweiten Eingang 18 zugeführt werden. Diese Signale werden vom Eingang 17 bzw. 18 beispielsweise dem Farbdecoder 4 zugeführt, dort unter Steuerung durch die Steuerschaltung 12 in das Ausgangssignal des ZF-Verstärkers 3 eingetastet und anschließend ebenso verarbeitet wie es oben beschrieben wurde.

Eine weitere vorteilhafte Weiterbildung der Erfindung besteht darin, das Auslesen der Kennungen aus dem nichtflüchtigen Speicher 13 in Ansprache auf die gemeinsamen mit den Fernsehsignalen übertragenen Quellenidentifikationssignale aufzurufen bzw. auf dem Bildschirm BS darzustellen. Dadurch ist eine feste Zuordnung zwischen Stationstastennummer und Speicherplatz innerhalb des nichtflüchtigen Speichers 13 nicht mehr notwendig.

Die vorstehend beschriebene Erfindung kann verwendet werden, um einen Überblick über das momentane Programmangebot zu erhalten.

## Patentansprüche

1. Anordnung zur gleichzeitigen Darstellung mehrerer Fernsehsignale mit
- einer Wahlschaltung (16) zur Anwahl eines Betriebszustandes, in dem Fernsehsignale von mehreren Signalquellen gleichzeitig dargestellt werden,
- einem Speicher (6) mit mehreren Speicherbereichen zur digitalen Abspeicherung eines Kleinbildes mit reduzierter Auflösung zu jedem der Fernsehsignale,
- einer Steuerschaltung (12) zur Erzeugung der Schreib- und Lesetaktsignale für den Speicher (6), und
- einem Bildschirm (BS), auf dem die Fernsehsignale in Form mehrerer Kleinbilder gleichzeitig und nichtüberlappend dargestellt werden,
**dadurch gekennzeichnet,** daß
- in einem nichtflüchtigen Speicher (13) für jede Signalquelle eine Kennung in digitaler Form abgespeichert ist,
- bei getätigter Anwahl des genannten Betriebszustandes die den dargestellten Kleinbildern zugehörigen Kennungen aus dem nichtflüchtigen Speicher (13) ausgelesen werden, und
- die Kennungen in alphanumerischer Form auf dem Bildschirm (BS) nichtüberlappend mit den und außerhalb der zugehörigen Kleinbilder dargestellt werden.

2. Anordnung nach Anspruch 1, **dadurch gekennzeichnet**, daß die Kennung als helle Schriftzeichen auf dunklem Hintergrund dargestellt werden.

3. Anordnung nach Anspruch 1 oder 2, **dadurch gekennzeichnet**, daß die Wahlschaltung (16) ein Fernbedienungsgeber ist und die Kennungen unter Verwendung des Fernbedienungsgebers manuell eingegeben werden.

4. Anordnung nach Anspruch 1 oder 2, **dadurch gekennzeichnet**, daß zumindest Teile der Kennung aus im Sender erzeugten, gemeinsamen mit den Fernsehsignalen übertragenen Quellenidentifikationssignalen abgeleitet werden.

5. Anordnung nach Anspruch 3 oder 4, **dadurch gekennzeichnet**, daß die im nichtflüchtigen Speicher (13) abgespeicherten Kennungen in Ansprache auf die gemeinsam mit den Fernsehsignalen übertragenen Quellenidentifikationssignale aufgerufen werden.

6. Anordnung nach einem oder mehreren der vorhergehenden Ansprüche, **dadurch gekennzeichnet**, daß eine Kennung eine Stationstastennummer und eine Senderkurzbezeichnung enthält.

7. Anordnung nach einem oder mehreren der vorhergehenden Ansprüche, **dadurch gekennzeichnet**, daß mittels der Wahlschaltung (16) von der Darstellung eines ersten Blockes von Kleinbildern auf eine Darstellung eines zweiten Blockes von Kleinbildern umgeschaltet werden kann.

8. Anordnung nach einem oder mehreren der vorhergehenden Ansprüche, **dadurch gekennzeichnet**, daß mittels der Wahlschaltung (16) die örtliche Lage und Reihenfolge der auf dem Bildschirm (BS) dargestellten Kleinbilder variiert werden kann.

## Claims

1. Arrangement for simultaneously displaying a plurality of television signals, having:
- a selector circuit (16) for selecting an operating mode in which television signals from a plurality of signal sources are displayed simultaneously,
- a memory (6) having a plurality of memory regions for digital storage of a small image having reduced resolution, for each of the television signals,
- a control circuit (12) for producing the read and write clock signals for the memory (6), and
- a screen (BS) on which the television signals are displayed simultaneously and without overlapping, in the form of a plurality of small images,
characterized in that
- a tag for each signal source is stored in digital form in a non-volatile memory (13),
- when the selection of the said operating mode is activated, the tags associated with the small images displayed are read out of the non-volatile memory (13), and
- the tags are displayed in alphanumeric form on the screen (BS), without overlapping, with and outside the associated small images.

2. Arrangement according to Claim 1, characterized in that the tag is displayed as bright characters on a dark background.

3. Arrangement according to Claim 1 or 2, characterized in that the selector circuit (16) is a remote control transmitter and the tags are entered manually using the remote control transmitter.

4. Arrangement according to Claim 1 or 2, characterized in that at least parts of the tag are derived from source identification signals which are produced in the transmitter and are transmitted together with the television signals.

5. Arrangement according to Claim 3 or 4, characterized in that the tags which are stored in the non-volatile memory (13) are called up when addressing the source identification signals which are transmitted together with the television signals.

6. Arrangement according to one or more of the preceding claims, characterized in that a tag contains a station key number and an abbreviated transmitter designation.

7. Arrangement according to one or more of the preceding claims, characterized in that it is possible to change over from the display of a first block of small images to a display of a second block of small images by means of the selector circuit (16).

8. Arrangement according to one or more of the preceding claims, characterized in that the physical position and sequence of the small images displayed on the screen (BS) can be varied by means of the selector circuit (16).

## Revendications

1. Dispositif pour représenter simultanément plusieurs signaux de télévision, comportant
- un circuit de sélection (16) pour sélectionner l'état de fonctionnement, dans lequel des signaux de télévision provenant de plusieurs sources de signaux sont représentées simultanément,
- une mémoire (6) comportant plusieurs zones de mémoire pour la mémorisation numérique d'une image de petit format possédant une résolution réduite pour chacun des signaux de télévision,
- un circuit de commande (12) pour produire des signaux de cadence d'enregistrement et de lecture pour la mémoire (6), et
- un écran (BS), sur lequel les signaux de télévision sont représentés simultanément et sans chevauchement sous la forme de plusieurs images de petit format,
caractérisé par le fait que
- une caractérisation sous forme numérique est mémorisée dans une mémoire non volatile (13), pour chaque source de signaux,
- lorsque la sélection dudit état de fonctionnement est activée, les caractérisations associées aux images de petit format représentées sont lues à partir de la mémoire non volatile (13), et
- les caractérisations sont représentées sous forme alphanumérique sur l'écran (BS), sans chevauchement avec les images de petit format associées et à l'extérieur de ces images.

2. Dispositif selon la revendication 1, caractérisé en ce que la caractérisation est représentée sous la forme de signes d'écriture clairs sur un fond sombre.

3. Dispositif suivant la revendication 1 ou 2, caractérisé en ce que le circuit de sélection (16) est un générateur de télécommande et les caractérisations sont introduites manuellement moyennant l'utilisation du générateur de télécommande.

4. Dispositif suivant la revendication 1 ou 2, caractérisé en ce qu'au moins des parties de la caractérisation sont élaborées à partir de signaux d'identification de sources, qui sont produits dans l'émetteur et sont transmis en commun avec les signaux de télévision.

5. Dispositif suivant la revendication 3 ou 4, caractérisé en ce que les caractérisations mémorisées dans la mémoire non volatile (13) sont appelées lors de l'appel des signaux d'identification de source, transmis en commun avec les signaux de télévision.

6. Dispositif selon une ou plusieurs des revendications précédentes, caractérisé en ce qu'une caractérisation contient un numéro de touche de station et une désignation abrégée de l'émetteur.

7. Dispositif selon une ou plusieurs des revendications précédentes, caractérisé en ce que le circuit de sélection (16) réalise une commutation de la représentation d'un premier bloc d'images de petit format à une représentation d'un second bloc d'images de petit format.

8. Dispositif selon une ou plusieurs des revendications précédentes, caractérisé en ce qu'au moyen du circuit de sélection (16), la position locale et la succession des images de petit format représentées sur l'écran (BS) peuvent être modifiées.
